# EUROPÄISCHE PATENTSCHRIFT

(11) **EP 3 473 429 B1**
(45) Veröffentlichungstag und Bekanntmachung des Hinweises auf die Patenterteilung: **22.06.2022**
(21) Anmeldenummer: 18194438.0
(22) Anmeldetag: 14.09.2018
(51) Int. Cl.: B32B 5/02, B32B 5/08, B32B 25/10, B32B 25/14, B32B 37/00, B32B 1/08, B32B 3/08, B32B 3/30, B60K 15/01

(54) **FLUIDLEITUNG ZUM LEITEN EINES FLUIDS**
FLUID CONDUIT FOR GUIDING A FLUID
CONDUITE DE FLUIDE DESTINÉE À CONDUIRE UN FLUIDE

(30) Priorität: 20.10.2017 DE 102017124606
(43) Veröffentlichungstag der Anmeldung: 24.04.2019
(73) Patentinhaber: VERITAS AG, 63571 Gelnhausen (DE)
(72) Erfinder: Rosemann, Michael, 63594 Hasselroth (DE); Knopp, Matthias, 63486 Bruchköbel (DE)
(74) Vertreter: Patentship Patentanwaltsgesellschaft mbH

(56) Entgegenhaltungen:
- EP-A1- 3 205 493
- EP-A2- 3 382 251
- DE-A1-102011 002 256

## Beschreibung

Die vorliegende Erfindung betrifft eine Fluidleitung zum Leiten eines Fluids, insbesondere eine Fluidleitung in einem Fahrzeug zum Leiten eines Fluids.

In einem Fahrzeug wird eine Vielzahl von Fluidleitungen verwendet, um Gase oder Flüssigkeiten zu transportieren. Um einen Verbrennungsmotor eines Kraftfahrzeuges während des Betriebs mit Ladeluft zu versorgen, wird Ladeluft durch eine als Ladeluftleitung ausgebildete Fluidleitung geleitet. Um einen Verbrennungsmotor eines Kraftfahrzeuges zu betreiben, wird eine Betriebsflüssigkeit, insbesondere Motoröl, durch eine als Betriebsflüssigkeitsleitung ausgebildete Fluidleitung geleitet.

In der DE 10 2009 026 254 A1 ist ein Schlauch mit einer Innenschicht aus einer aminisch vernetzten Kautschukmischung mit medienbeständigen Eigenschaften, einer Haftschicht aus einer peroxidisch vernetzten Kautschukmischung, einer Festigkeitsträgerschicht und einer Außenschicht offenbart.

In der DE 10 2013 103 759 A1 ist ein Schlauch mit einer Innenschicht als Sperrschicht und einer Außenschicht aus einer vernetzten Kautschukmischung offenbart.

In der US 8,449,961 B2 ist ein Schlauch mit einer Innenschicht aus Elastomer, einer Zwischenschicht aus Elastomer, einer Verstärkungsstruktur und einer Außenschicht aus Elastomer offenbart.

In der EP 1 546 595 B1 ist Rohr offenbart, welche insbesondere für einen Luftansaugkreislauf in einem Kraftfahrzeugmotor bestimmt ist, wobei das Rohr eine innere Schicht, eine flexible äußere Schicht und eine Zwischenschicht umfasst, wobei die Zwischenschicht die Haftung zwischen der inneren Schicht und der äußeren Schicht erleichtert.

Die Druckschrift EP 3 205 493 A1 beschreibt eine Schlauchleitung für ein Fluid und ein Verfahren zum Herstellen einer solchen Schlauchleitung.

Die Druckschrift EP 3 382 251 A2 beschreibt einen Fluidschlauch mit einem umlaufenden Verdickungswulst.

Die Druckschrift DE 10 2011 002 256 A1 offenbart einen Schlauch, der ein Kühlmittel transportiert, seine Verwendung und Verfahren zu dessen Herstellung.

Es ist die der Erfindung zugrundeliegende Aufgabe, eine Fluidleitung für ein Kraftfahrzeug bereitzustellen, welche eine vorteilhafte chemische und mechanische Widerstandsfähigkeit aufweist.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Fluidleitung zum Leiten eines Fluids gelöst, mit einer Außenschicht, welche ein vernetztes chloriertes Polyethylen (CPE) umfasst, einem Festigkeitsträger, welche innerhalb der Außenschicht angeordnet ist, und einer Sperrschicht gelöst, welche innerhalb des Festigkeitsträgers angeordnet ist und welche einen Leitungsinnenraum der Fluidleitung zum Leiten des Fluids begrenzt, wobei die Sperrschicht ausgebildet ist, eine Diffusion des Fluids durch die Sperrschicht zu reduzieren.

Dadurch wird beispielsweise der technische Vorteil erreicht, dass eine Fluidleitung bereitgestellt werden kann, welche eine wirksame chemische Beständigkeit gegenüber Fluid aufweist, welches durch den Leitungsinnenraum der Fluidleitung geleitet wird, und welche eine wirksame mechanische Beständigkeit gegenüber äußeren Einflüssen aufweist.

Die Sperrschicht grenzt die Fluidleitung gegenüber dem Leitungsinnenraum der Fluidleitung ab und reduziert eine Diffusion des Fluids durch die Sperrschicht. Dadurch kann sichergestellt werden, dass auch chemisch reaktive Fluide, welche durch die Fluidleitung geleitet werden, die Fluidleitung nicht beschädigen, so dass eine wirksame Leitung von Fluiden, wie z.B. Ladeluft mit Säuren oder Kondensaten, sowie Motoröl, durch die Fluidleitung sichergestellt werden kann.

Der Festigkeitsträger der Fluidleitung stellt sicher, dass auch wenn das Fluid mit einem hohen Druck durch die Fluidleitung geleitet wird, die strukturelle Integrität der Fluidleitung nicht beeinträchtigt wird. Dies wird dadurch gewährleistet, dass der Festigkeitsträger auf die Fluidleitung wirkende Druckkräfte wirksam aufnehmen kann.

Die Außenschicht grenzt die Fluidleitung gegenüber einem Außenbereich der Fluidleitung ab und schützt die darunter liegende Sperrschicht und den darunterliegenden Festigkeitsträger vor mechanischer und/oder chemischer Beschädigung, z.B. falls die Fluidleitung in der beengten Bauraumsituation in einem Motorraum eines Kraftfahrzeugs in Kontakt mit anderen Bauteilen tritt.

Die Außenschicht besteht hierbei aus vernetztem chloriertem Polyethylen (CPE). Das vernetzte chlorierte Polyethylen (CPE) stellt hierbei insbesondere eine wirksame chemische Beständigkeit der Außenschicht der Fluidleitung gegenüber Motoröl sicher, was durch herkömmliche verwendete Außenschichten aus Ethylen-Propylen-Dien-Kautschuk (EPDM) nicht in diesem Ausmaß gewährleistet werden kann.

Die Fluidleitung ist hierbei als ein formstabiler Formschlauch ausgebildet, welcher insbesondere einen zweidimensional oder dreidimensional gekrümmten Verlauf aufweist, so dass ein wirksames Verlegen der Fluidleitung in einer beengten Bauraumsituation ermöglicht wird.

Somit gewährleistet die Fluidleitung gemäß der vorliegenden Offenbarung eine kostengünstige Konstruktion einer Fluidleitung, welche eine vorteilhafte chemische und mechanische Widerstandsfähigkeit aufweist.

In einer vorteilhaften Ausführungsform umfasst die Fluidleitung eine Zwischenschicht, welche zwischen der Sperrschicht und dem Festigkeitsträger angeordnet ist.

Dadurch wird beispielsweise der technische Vorteil erreicht, dass die Zwischenschicht einen wirksamen Haftverbund zwischen der Sperrschicht und dem Festigkeitsträger innerhalb der Fluidleitung sicherstellt, so dass die strukturelle Integrität der Fluidleitung während des Betriebs der Fluidleitung besonders vorteilhaft sichergestellt werden kann.

In einer vorteilhaften Ausführungsform umfasst die Zwischenschicht ein vernetztes chloriertes Polyethylen (CPE).

Dadurch wird beispielsweise der technische Vorteil erreicht, dass das vernetzte chlorierte Polyethylen (CPE) sicherstellt, dass die Zwischenschicht einen wirksamen Haftverbund zwischen der Sperrschicht und dem Festigkeitsträger bereitstellen kann. Hierbei weist das vernetzte chlorierte Polyethylen (CPE) besonders vorteilhafte strukturelle Eigenschaften auf.

Erfindungsgemäß gemäß einer Alternative umfasst die Sperrschicht einen aminisch vernetzten Ethylen-Acrylat Kautschuk (AEM) und/oder einen aminisch vernetzten Polyacrylat-Kautschuk (ACM), wobei der aminisch vernetzte Ethylen-Acrylat Kautschuk (AEM) und/oder der aminisch vernetzte Polyacrylat-Kautschuk (ACM) ein Di-Amin und einen basischen Aktivator umfasst.

Dadurch wird beispielsweise der technische Vorteil erreicht, dass der aminisch vernetzte Ethylen-Acrylat Kautschuk (AEM) und/oder der aminisch vernetzte Polyacrylat-Kautschuk (ACM) die Diffusion einer Vielzahl von Fluiden durch die Sperrschicht wirksam reduzieren kann und somit besonders vorteilhafte Eigenschaften der Sperrschicht sicherstellen. Durch die Zugabe des Diamins und des basischen Aktivators kann eine wirksame aminische Vernetzung in der Sperrschicht sichergestellt werden. Der Anteil des Diamins in der Sperrschicht beträgt insbesondere von 0,3 Gew.-% bis 2,1 Gew.-%, insbesondere von 0,4 Gew.-% bis 1,5 Gew.-%, insbesondere von 0,5 Gew.-% bis 1,0 Gew.-%. Der Anteil des basischen Aktivators in der Sperrschicht beträgt insbesondere von 0,5 Gew.-% bis 3,5 Gew.- %, insbesondere von 0,5 Gew.-% bis 2,4 Gew.-%, insbesondere von 0,7 Gew.-% bis 2,0 Gew.-%.

In einer vorteilhaften Ausführungsform umfasst das Diamin Hexamethylendiamin (HMD), Hexamethylendiamin-Carbamat (HMDC) und/oder 2,2-Bis[4-(4-aminophenoxy)phenyl]propen und/oder umfasst der basische Aktivator Diphenylguanidin (DPG) und/oder Diazabicycloundecen (DBU).

Dadurch wird beispielsweise der technische Vorteil erreicht, dass die Zugabe von Hexamethylendiamin (HMD), Hexamethylendiamin-Carbamat (HMDC) und/oder 2,2-Bis[4-(4-aminophenoxy)phenyl]propen als Diamin, bzw. Diphenylguanidin (DPG) und/oder Diazabicycloundecen (DBU) als basischer Aktivator bei der Herstellung der Sperrschicht sicherstellen, dass eine wirksame Vernetzung des aminisch vernetzten Ethylen-Acrylat Kautschuks (AEM) und/oder des aminisch vernetztes Polyacrylat-Kautschuks (ACM) erreicht wird.

Erfindungsgemäß gemäß einer Alternative umfasst die Sperrschicht einen peroxidisch vernetzten Ethylen-Acrylat Kautschuk (AEM) und/oder einen peroxidisch vernetzten Polyacrylat-Kautschuk (ACM), wobei der peroxidisch vernetzte Ethylen-Acrylat Kautschuk (AEM) und/oder der peroxidisch vernetzte Polyacrylat-Kautschuk (ACM) ein Peroxid-Derivat, einen Co-Aktivator, und/oder einen Säureakzeptor umfasst, wobei das Peroxid-Derivat insbesondere ein Alkyl-Aralkyl-Peroxid-Derivat, ein Diaralkyl-Peroxid-Derivat, ein Peroxyketal-Derivat und/oder ein Peroxyester-Derivat umfasst, wobei der Co-Aktivator insbesondere Triallylcyanurat (TAC), Triallylisocyanurat (TAIC), Trimethylolpropan-trimethacrylat (TRIM), Dimethylacrylat, Trimethylacrylat, Triazin, und/oder Bismaleinimid umfasst, und/oder wobei der Säureakzeptor insbesondere Epoxidharze, epoxidierte Öle, Magnesiumoxid und/oder Hydrotalcit umfasst.

umfasst, und/oder wobei der Säureakzeptor insbesondere Epoxidharze, epoxidierte Öle, Magnesiumoxid und/oder Hydrotalcit umfasst.

Dadurch wird beispielsweise der technische Vorteil erreicht, dass der peroxidisch vernetzte Ethylen-Acrylat Kautschuk (AEM) und/oder der peroxidisch vernetzte Polyacrylat-Kautschuk (ACM) die Diffusion einer Vielzahl von Fluiden durch die Sperrschicht wirksam reduzieren und somit besonders vorteilhafte Eigenschaften der Sperrschicht sicherstellen. Durch die Zugabe des Peroxid-Derivats, des Co-Aktivators und des Säureakzeptors kann eine wirksame peroxidische Vernetzung in der Sperrschicht sichergestellt werden. Der Anteil des Peroxid-Derivats in der Sperrschicht beträgt insbesondere von 0,5 Gew.-% bis 6,0 Gew.-%, insbesondere von 0,8 Gew.-% bis 4,0 Gew.-%, insbesondere von 1,0 Gew.-% bis 2,0 Gew.- %. Der Anteil des Co-Aktivators in der Sperrschicht beträgt insbesondere von 0,1 Gew.-% bis 10,0 Gew.-%, insbesondere von 0,5 Gew.-% bis 5,0 Gew.-%, insbesondere von 1,0 Gew.-% bis 2,0 Gew.-%.

In einer vorteilhaften Ausführungsform umfasst die Außenschicht und/oder die Zwischenschicht aus vernetztem chloriertem Polyethylen (CPE) ein Thiazol-Derivat, ein Fettsäureamid-Derivat und/oder einen Säureakzeptor, wobei der Säureakzeptor insbesondere Epoxidharze, epoxidierte Öle, Magnesiumoxid und/oder Hydrotalcit umfasst.

Dadurch wird beispielsweise der technische Vorteil erreicht, dass ein Thiazol-vernetztes chloriertes Polyethylen (CPE) besonders vorteilhafte Eigenschaften der Außenschicht und/oder der Zwischenschicht sicherstellt. Der Anteil des Thiazol-Derivats in der Außenschicht und/oder der Zwischenschicht beträgt insbesondere von 0,1 Gew.-% bis 5,0 Gew.-%, insbesondere von 0,5 Gew.-% bis 3,0 Gew.-%, insbesondere von 0,7 Gew.-% bis 1,5 Gew.-%. Der Anteil des Fettsäureamid-Derivat in der Außenschicht und/oder der Zwischenschicht beträgt insbesondere von 0,1 Gew.-% bis 5,0 Gew.-%, insbesondere von 0,5 Gew.-% bis 3,0 Gew.-%, insbesondere von 0,7 Gew.-% bis 1,5 Gew.-%.

In einer vorteilhaften Ausführungsform umfasst die Außenschicht und/oder die Zwischenschicht ein peroxidisch vernetztes chloriertes Polyethylen (CPE), wobei das peroxidisch vernetzte chlorierte Polyethylen (CPE) ein Peroxid-Derivat, einen Co-Aktivator, und/oder einen Säureakzeptor umfasst, wobei das Peroxid-Derivat insbesondere ein Alkyl-Aralkyl-Peroxid-Derivat, ein Diaralkyl-Peroxid-Derivat, ein Peroxyketal-Derivat und/oder ein Peroxyester-Derivat umfasst, wobei der Co-Aktivator insbesondere Triallylcyanurat (TAC), Triallylisocyanurat *(*TAIC*)*, Trimethylolpropan-trimethacrylat (TRIM), Dimethylacrylat, Trimethylacrylat, Triazin, und/oder Bismaleinimid umfasst, und/oder wobei der Säureakzeptor insbesondere Epoxidharze, epoxidierte Öle, Magnesiumoxid und/oder Hydrotalcit umfasst.

Dadurch wird beispielsweise der technische Vorteil erreicht, dass peroxidisch vernetztes chloriertes Polyethylen (CPE) besonders vorteilhafte Eigenschaften der Außenschicht und/oder der Zwischenschicht sicherstellen. Durch die Zugabe des Peroxid-Derivats, des Co-Aktivators und des Säureakzeptors kann eine wirksame peroxidische Vernetzung in der Außenschicht und/oder der Zwischenschicht sichergestellt werden. Der Anteil des Peroxid-Derivats in der Sperrschicht beträgt insbesondere von 0,5 Gew.-% bis 6,0 Gew.-%, insbesondere von 0,8 Gew.-% bis 4,0 Gew.-%, insbesondere von 1,0 Gew.-% bis 2,0 Gew.- %. Der Anteil des Co-Aktivators in der Sperrschicht beträgt insbesondere von 0,1 Gew.-% bis 10,0 Gew.-%, insbesondere von 0,5 Gew.-% bis 5,0 Gew.-%, insbesondere von 1,0 Gew.-% bis 2,0 Gew.-%.

In einer vorteilhaften Ausführungsform umfasst der Festigkeitsträger aromatische oder aliphatische Polyamid-Fasern, Polyoxadiazol-Fasern, Polyester-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon.

Dadurch wird beispielsweise der technische Vorteil erreicht, dass die genannten Fasern eine hohe Temperatur- und Druckbeständigkeit aufweisen und sich vorteilhaft zu verformbaren Festigkeitsträgern verarbeiten lassen. Aufgrund der vorteilhaften mechanischen und chemischen Eigenschaften können insbesondere Polyester-Fasern in dem Festigkeitsträger vorteilhaft verwendet werden.

In einer vorteilhaften Ausführungsform ist der Festigkeitsträger als ein einlagiger oder mehrlagiger Festigkeitsträger ausgebildet ist, wobei der Festigkeitsträger insbesondere ein Gewebe, Gewirk und/oder Gestrick umfasst.

Dadurch wird beispielsweise der technische Vorteil erreicht, dass ein entsprechend ausgebildeter Festigkeitsträger besonders wirksam Druckbelastungen aufnehmen kann.

In einer vorteilhaften Ausführungsform ist der Fluidschlauch als ein formstabiler Formschlauch ausgebildet, wobei der Formschlauch insbesondere einen zweidimensional oder dreidimensional gekrümmten Verlauf aufweist.

Dadurch wird beispielsweise der technische Vorteil erreicht, dass ein Formschlauch besonders vorteilhaft in einer beengten Bauraumsituation, z.B. in einem Motorraum eines Kraftfahrzeuges, verlegt werden kann. Hierbei kann die zweidimensionale oder dreidimensionale Krümmung des Formschlauchs an die geometrischen Beschränkungen in dem Bauraum angepasst werden. Der Formschlauch kann zumindest abschnittsweise elastisch sein, wodurch der Formschlauch beim Einbau partiell aufgebogen werden kann, um einen wirksamen Einbau zu gewährleisten, wobei sich der Formschlauch nach dem Einbau jedoch wieder in die ursprüngliche Form des Formschlauchs zurück verformt, so dass der Formschlauch eine wirksame Formstabilität aufweist. Insbesondere weist der zweidimensional oder dreidimensional gekrümmte formstabile Formschlauch eine Mehrzahl von Biegungen auf.

In einer vorteilhaften Ausführungsform weist der formstabile Formschlauch an einer dem Leitungsinnenraum der Fluidleitung zugewandten Innenseite der Sperrschicht einen die Innenseite der Sperrschicht umlaufenden Verdickungswulst auf.

Dadurch wird beispielsweise der technische Vorteil erreicht, dass der die Innenseite der Sperrschicht umlaufenden Verdickungswulst, eine besonders wirksame mechanische Stabilisierung des formstabilen Formschlauchs sicherstellt. Hierbei kann der umlaufende Verdickungswulst die Innenseite der Sperrschicht insbesondere abschnittsweise oder vollständig umlaufen. Hierbei kann an der Innenseite der Sperrschicht eine Vielzahl von Verdickungswulsten angeordnet sein, welche die Innenseite der Sperrschicht abschnittsweise oder vollständig umlaufen.

In einer vorteilhaften Ausführungsform ist die Fluidleitung als ein Spritzgussformteil oder ein Extrusionsformteil geformt.

Dadurch wird beispielsweise der technische Vorteil erreicht, dass ein Spritzgussformteil oder Extrusionsformteil eine besonders vorteilhafte Fertigung der Fluidleitung sicherstellt und zudem eine wirksame Anordnung und stabile Verbindung der einzelnen Schichten innerhalb der Fluidleitung sichergestellt wird.

In einer vorteilhaften Ausführungsform ist die Fluidleitung als eine Betriebsflüssigkeitsleitung geformt ist, welche ausgebildet ist Betriebsflüssigkeiten, insbesondere Motoröl, in einem Fahrzeug zu leiten, oder ist die Fluidleitung als eine Ladeluftleitung geformt, welche ausgebildet ist Ladeluft, insbesondere Ladeluft mit Säuren, Kondensaten, und/oder Motoröl, in einem Fahrzeug zu leiten.

Dadurch wird beispielsweise der technische Vorteil erreicht, dass die Fluidleitung eine wirksame chemische und mechanische Beständigkeit gegenüber einer Vielzahl von verschiedenen Fluiden aufweist.

In einer vorteilhaften Ausführungsform weist die Fluidleitung einen Innendurchmesser zwischen 20 mm und 100 mm, insbesondere zwischen 30 mm und 85 mm auf.

Dadurch wird beispielsweise der technische Vorteil erreicht, dass der Innendurchmesser der Fluidleitung ein ausreichend großes Volumen des Leitungsinnenraums bereitstellt, so dass eine ausreichende Menge an Fluid durch den Leitungsinnenraum der Fluidleitung geführt werden kann.

In einer vorteilhaften Ausführungsform weist die Fluidleitung eine Wandstärke zwischen 2 mm und 7 mm, insbesondere zwischen 3,5 mm und 5,0 mm auf.

Dadurch wird beispielsweise der technische Vorteil erreicht, dass die Wandstärke eine ausreichende Stabilität der Fluidleitung bereitstellt, so dass die Fluidleitung auch in einer beengten Bauraumsituation wirksam verlegt werden kann.

Gemäß einem zweiten Aspekt der Erfindung wird die Aufgabe durch ein Verfahren zum Herstellen einer Fluidleitung zum Leiten eines Fluids gelöst, umfassend die folgenden Schritte, Extrudieren einer Sperrschicht, welche einen Leitungsinnenraum der Fluidleitung zum Leiten des Fluids begrenzt, wobei die Sperrschicht ausgebildet ist, eine Diffusion des Fluids durch die Sperrschicht zu reduzieren, Anordnen eines Festigkeitsträgers auf der Sperrschicht, und Extrudieren einer Außenschicht auf dem Festigkeitsträger, wobei die Außenschicht ein vernetztes chloriertes Polyethylen (CPE) umfasst.

Dadurch wird beispielsweise der technische Vorteil erreicht, dass das Verfahren die vorteilhafte Herstellung einer drei-lagigen Fluidleitung mit einer wirksamen chemischen und mechanischen Beständigkeit sicherstellt.

In einer vorteilhaften Ausführungsform umfasst das Verfahren die folgenden Schritte, Extrudieren einer Sperrschicht, welche einen Leitungsinnenraum der Fluidleitung zum Leiten des Fluids begrenzt, wobei die Sperrschicht ausgebildet ist, eine Diffusion des Fluids durch die Sperrschicht zu reduzieren, Extrudieren einer Zwischenschicht auf der Sperrschicht, Anordnen eines Festigkeitsträgers auf der Zwischenschicht, und Extrudieren einer Außenschicht auf dem Festigkeitsträger, wobei die Außenschicht ein vernetztes chloriertes Polyethylen (CPE) umfasst, und wobei insbesondere das Extrudieren der Sperrschicht und das Extrudieren der Zwischenschicht als separate Extrusionsschritte oder als ein gemeinsamer Co-Extrusionsschritt durchgeführt werden.

Dadurch wird beispielsweise der technische Vorteil erreicht, dass das Verfahren die vorteilhafte Herstellung einer vier-lagigen Fluidleitung mit einer wirksamen chemischen und mechanischen Beständigkeit sicherstellt.

Ausführungsbeispiele der Erfindung sind in den Zeichnungen dargestellt und werden im Folgenden näher beschrieben.

Es zeigen:
- Fig. 1: eine perspektivische Ansicht einer Fluidleitung gemäß einer ersten Ausführungsform;
- Fig. 2: eine perspektivische Ansicht einer Fluidleitung gemäß einer zweiten Ausführungsform; und
- Fig. 3: eine schematische Darstellung eines Verfahren zum Herstellen einer Fluidleitung.

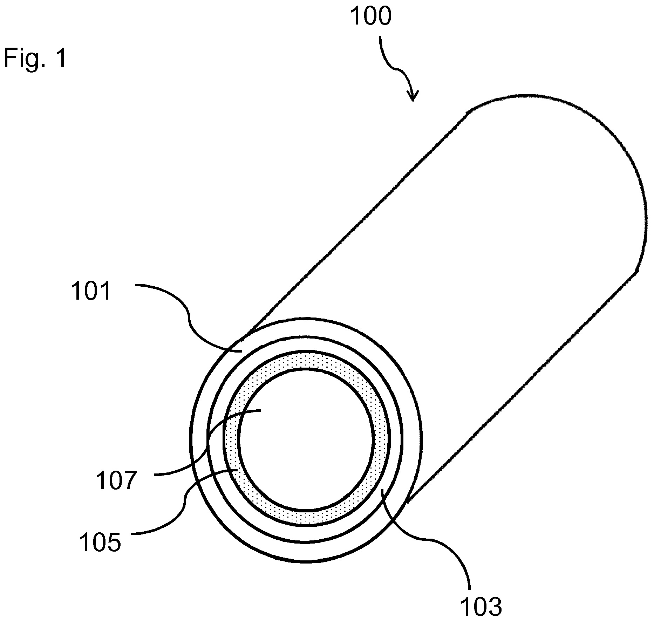

Fig. 1 zeigt eine perspektivische Ansicht einer Fluidleitung 100. Der Fluidleitung 100 umfasst insbesondere eine Fluidleitung 100 für Fahrzeuge, insbesondere für Kraftfahrzeuge mit einem Verbrennungsmotor.

Kraftfahrzeuge mit Verbrennungsmotoren weisen Fluidleitungen 100 auf, welche insbesondere eine Ladeluftleitung umfassen, welche ausgebildet ist Ladeluft dem Verbrennungsmotor zuzuführen, oder welche insbesondere eine Flüssigkeitsleitung in einem Flüssigkeitskreislauf des Kraftfahrzeuges umfasst, wobei hierbei durch die Fluidleitung 100 geleitete Flüssigkeit, insbesondere Motoröl, dem Verbrennungsmotor zugeführt wird, um den Betrieb des Verbrennungsmotors sicherzustellen.

Die durch eine Ladeluftleitung geleitete Ladeluft kann neben der Ladeluft auch noch Verunreinigungen, wie z.B. Motoröl, Kraftstoffdämpfe, Kraftstoffkondensate, Abgase, Blowby-Gase und/oder Säuren, umfassen. Aus diesem Grund müssen Fluidleitungen 100 zur Leitung von Ladeluft und/oder Flüssigkeit eine ausreichende chemische Beständigkeit gegenüber dem geleiteten Fluid aufweisen. Um den mit hohen Temperaturen und hohen Druck geleiteten Fluiden widerstehen zu können, müssen die entsprechende Fluidleitungen 100 auch eine ausreichende mechanische Beständigkeit aufweisen. Zudem müssen die entsprechenden Fluidleitungen 100 in der beengten Bauraumsituation des Motoraums des Kraftfahrzeuges mit engen Biegeradien verlegt werden können, und aus diesem Grund dynamisch verformbare Eigenschaften aufweisen.

Die Fluidleitung 100 ist hierbei als ein formstabiler Formschlauch ausgebildet, welcher insbesondere einen zweidimensional oder dreidimensional gekrümmten Verlauf aufweist, wodurch der Formschlauch besonders vorteilhaft in einer beengten Bauraumsituation eines Motorraums eines Kraftfahrzeuges verbaut werden kann. Bei der Herstellung einer als Formschlauch ausgebildeten Fluidleitung 100 wird ein Schlauchrohling in die gewünschte Form des Formschlauches gebogen. Anschließend wird der Schlauchrohling, z.B. durch Vulkanisation, in der gewünschten Form fixiert, so dass ein formstabiler Formschlauch erhalten wird. Der formstabile Formschlauch weist eine gewisse Flexibilität auf, jedoch kehrt der Formschlauch bei einem Verbiegen oder Verdrehen des Formschlauchs erneut in die ursprüngliche Form zurück. Ein zweidimensional oder dreidimensional gekrümmter formstabiler Formschlauch weist insbesondere eine Mehrzahl von Biegungen auf.

Die in der Fig. 1 dargestellte Fluidleitung 100 weist eine Außenschicht 101 auf, welche ausgebildet ist, die Fluidleitung 100 vor äußeren mechanischen und chemischen Einflüssen wirksam zu schützen. Die Außenschicht 101 umfasst hierbei ein vernetztes chloriertes Polyethylen (CPE), welches eine wirksame Ölbeständigkeit aufweist, und dadurch gegenüber herkömmlich verwendetem Ethylen-Propylen-Dien-Kautschuk (EPDM) vorteilhafte Eigenschaften aufweist.

Das vernetzte chlorierte Polyethylen (CPE) der Außenschicht 101 kann hierbei ein Thiazol-Derivat, ein Fettsäureamid-Derivat und/oder einen Säureakzeptor umfassen, wobei der Säureakzeptor insbesondere Epoxidharze, epoxidierte Öle, Magnesiumoxid und/oder Hydrotalcit umfasst, um eine wirksame Vernetzung des vernetzten chlorierten Polyethylens (CPE) sicherzustellen.

Alternativ kann das vernetzte chlorierte Polyethylen (CPE) der Außenschicht 101 ein peroxidisch vernetztes chloriertes Polyethylen (CPE) umfassen, wobei das peroxidisch vernetzte chlorierte Polyethylen (CPE) ein Peroxid-Derivat, einen Co-Aktivator, und/oder einen Säureakzeptor umfasst, um eine wirksame Vernetzung des vernetzten chlorierten Polyethylens (CPE) sicherzustellen. Das Peroxid-Derivat kann insbesondere ein Alkyl-Aralkyl-Peroxid-Derivat, ein Diaralkyl-Peroxid-Derivat, ein Peroxyketal-Derivat und/oder ein Peroxyester-Derivat umfassen. Der Co-Aktivator kann insbesondere Triallylcyanurat (TAC), Triallylisocyanurat *(*TAIC*)*, Trimethylolpropan-trimethacrylat (TRIM), Dimethylacrylat, Trimethylacrylat, Triazin, und/oder Bismaleinimid umfassen. Der Säureakzeptor kann insbesondere Epoxidharze, epoxidierte Öle, Magnesiumoxid und/oder Hydrotalcit umfassen.

Durch die Außenschicht 101 kann eine mechanische Schutzfunktion der Fluidleitung 100 sichergestellt werden, da beim Kontakt der Außenschicht 101 der Fluidleitung 100 mit anderen Bauteilen in dem Fahrzeug auf die Außenschicht 101 wirkende mechanische Belastungen besonders wirksam durch die Außenschicht 101 aufgenommen werden können, so dass eine Beschädigung der innerhalb der Außenschicht 101 liegenden Schichten verhindert werden kann.

Somit stellt die Außenschicht 101 der Fluidleitung 100 eine besonders vorteilhafte chemische und mechanische Schutzfunktion der Fluidleitung 100 sicher.

Innerhalb der Außenschicht 101 ist ein Festigkeitsträger 103 der Fluidleitung 100 angeordnet, welcher eine wirksame Stabilität der Fluidleitung 100 sicherstellt, wenn Fluid mit hohen Drücken durch die Fluidleitung 100 geleitet wird.

Der Festigkeitsträger 103 umfasst insbesondere aromatische oder aliphatische Polyamid-Fasern, Polyoxadiazol-Fasern, Polyester-Fasern, Aramid-Fasern, insbesondere meta-Aramid-Fasern und/oder para-Aramid-Fasern, Polyimid-Fasern, Polyvinylacetal-Fasern, Polyetheretherketon-Fasern, oder Mischungen davon.

Der Festigkeitsträger 103 kann hierbei insbesondere als ein einlagiger oder mehrlagiger Festigkeitsträger 103 ausgebildet sein. Der Festigkeitsträger 103 kann hierbei insbesondere ein Gewebe, Gewirk und/oder Gestrick umfassen.

Innerhalb des Festigkeitsträgers 103 der Fluidleitung 100 ist eine Sperrschicht 105 angeordnet, welche einen Leitungsinnenraum 107 der Fluidleitung 100 zum Leiten eines Fluids begrenzt. Die Sperrschicht 105 ist hierbei ausgebildet eine Diffusion des Fluids durch die Sperrschicht 105 zu reduzieren.

Die Sperrschicht 105 umfasst insbesondere einen aminisch vernetzten Ethylen-Acrylat-Kautschuk (AEM) und/oder einen aminisch vernetzten Polyacrylat-Kautschuk (ACM) oder umfasst alternativ einen peroxidisch vernetzten Ethylen-Acrylat-Kautschuk (AEM) und/oder einen peroxidisch vernetzten Polyacrylat-Kautschuk (ACM).

Um eine wirksame Vernetzung innerhalb des aminisch vernetzten AEM- und/oder ACM-Kautschuks der Sperrschicht 105, bzw. eine wirksame Vernetzung innerhalb des vernetzten CPE-Kautschuks der Außenschicht 101 zu erreichen, werden für die Vernetzung der Sperrschicht 105, bzw. für die Vernetzung der Außenschicht 101 verschiedene Vernetzungssysteme verwendet, welche unterschiedliche Vernetzungsmittel und Aktivatoren umfassen, die im Folgenden beschrieben sind.

Der aminisch vernetzte AEM- und/oder ACM-Kautschuk umfasst ein aminisches Vernetzungsmittel, welches insbesondere ein Diamin, insbesondere Hexamethylendiamin (HMD), Hexamethylendiamin-Carbamat (HMDC), und/oder 2,2-Bis[4-(4-aminophenoxy)phenyl]propen umfasst. Der Anteil des aminischen Vernetzungsmittels in der Sperrschicht 105 beträgt insbesondere von 0,3 Gew.-% bis 2,1 Gew.-%, insbesondere von 0,4 Gew.-% bis 1,5 Gew.-%, insbesondere von 0,5 Gew.-% bis 1,0 Gew.-%.

Der aminisch vernetzte AEM- und/oder ACM-Kautschuk umfasst ein ferner einen basischen Aktivator, insbesondere Diphenylguanidin (DPG) und/oder Diazabicycloundecen (DBU). Der Anteil des basischen Aktivators in der Sperrschicht 105 beträgt insbesondere von 0,5 Gew.- % bis 3,5 Gew.-%, insbesondere von 0,5 Gew.-% bis 2,4 Gew.-%, insbesondere von 0,7 Gew.-% bis 2,0 Gew.-%.

Der peroxidisch vernetzte Ethylen-Acrylat Kautschuk (AEM) und/oder der peroxidisch vernetzte Polyacrylat-Kautschuk (ACM) umfasst ein peroxidisches Vernetzungsmittel, welches insbesondere ein Peroxid-Derivat, einen Co-Aktivator, und/oder einen Säureakzeptor umfasst. Das Peroxid-Derivat umfasst insbesondere ein Alkyl-Aralkyl-Peroxid-Derivat, ein Diaralkyl-Peroxid-Derivat, ein Peroxyketal-Derivat und/oder ein Peroxyester-Derivat. Der Co-Aktivator umfasst insbesondere Triallylcyanurat (TAC), Triallylisocyanurat *(*TAIC*)*, Trimethylolpropan-trimethacrylat (TRIM), Dimethylacrylat, Trimethylacrylat, Triazin, und/oder Bismaleinimid. Der Säureakzeptor umfasst insbesondere Epoxidharze, epoxidierte Öle, Magnesiumoxid und/oder Hydrotalcit.

Der Festigkeitsträger 103 steht hierbei insbesondere in einem direkten Kontakt zur Sperrschicht 105 und zu der Außenschicht 101 der Fluidleitung 100, wobei hierbei insbesondere ein Haftverbund ausgebildet wird.

Insbesondere kann die Fluidleitung 100 als ein Spritzgussformteil oder ein Extrusionsformteil geformt sein. Die Sperrschicht 105 und die Außenschicht 101 können hierbei insbesondere in separaten Extrusions-Schritten extrudiert werden.

Somit ist die aus drei Schichten 101, 103, 105 bestehende Fluidleitung 100 als eine kostengünstige Fluidleitung 100 ausgebildet, welche eine wirksame chemische und mechanische Beständigkeit gegenüber einem durch den Leitungsinnenraum 107 geleiteten Fluid und gegenüber äußeren Einflüssen aufweist. Eine aus drei Schichten 101, 103, 105 bestehende Fluidleitung 100 kann in herkömmlich verwendeten Fertigungsanlagen für die drei-Schicht-Produktion hergestellt werden.

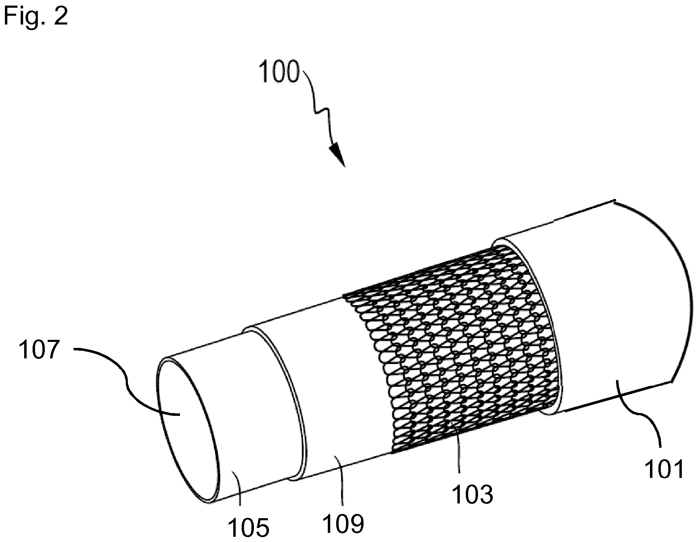

Fig. 2 zeigt eine perspektivische Ansicht einer Fluidleitung gemäß einer zweiten Ausführungsform.

Die Fluidleitung 100 umfasst eine Außenschicht 101 aus einem vernetzten chlorierten Polyethylen (CPE). Die Fluidleitung 100 umfasst einen Festigkeitsträger 103, welcher innerhalb der Außenschicht 101 angeordnet ist. Die Fluidleitung 100 umfasst eine Sperrschicht 105, welche innerhalb des Festigkeitsträgers 103 angeordnet ist und welche einen Leitungsinnenraum 107 der Fluidleitung 100 begrenzt, wobei der Leitungsinnenraum 107 ausgebildet ist, Fluid durch den Leitungsinnenraum 107 zu leiten.

Hinsichtlich der bevorzugten Bestandteile der Außenschicht 101, des Festigkeitsträgers 103 und der Sperrschicht 105 wird auf die Ausführungen in Bezug auf die erste Ausführungsform gemäß der Fig. 1 verwiesen.

Die Fluidleitung 100 umfasst ferner eine Zwischenschicht 109, welche zwischen der Sperrschicht 105 und dem Festigkeitsträger 103 angeordnet ist. Die Zwischenschicht 109 umfasst, ebenso wie die Außenschicht 101, ein vernetztes chloriertes Polyethylen (CPE).

Die Zwischenschicht 109 stellt einen wirksamen Haftverbund zwischen der Sperrschicht 105 und dem Festigkeitsträger 103 sicher.

Gemäß einer ersten Alternative umfasst das vernetzte chlorierte Polyethylen (CPE) der Zwischenschicht 109 ein Thiazol-Derivat, ein Fettsäureamid-Derivat und/oder einen Säureakzeptor. Der Säureakzeptor umfasst insbesondere Epoxidharze, epoxidierte Öle, Magnesiumoxid und/oder Hydrotalcit.

Gemäß einer zweiten Alternative umfasst das vernetzte chlorierte Polyethylen (CPE) der Zwischenschicht 109 ein Peroxid-Derivat, einen Co-Aktivator, und/oder einen Säureakzeptor. Das Peroxid-Derivat umfasst insbesondere ein Alkyl-Aralkyl-Peroxid-Derivat, ein Diaralkyl-Peroxid-Derivat, ein Peroxyketal-Derivat und/oder ein Peroxyester-Derivat. Der Co-Aktivator umfasst insbesondere Triallylcyanurat (TAC), Triallylisocyanurat (TAIC), Trimethylolpropan-trimethacrylat (TRIM), Dimethylacrylat, Trimethylacrylat, Triazin, und/oder Bismaleinimid. Der Säureakzeptor umfasst insbesondere Epoxidharze, epoxidierte Öle, Magnesiumoxid und/oder Hydrotalcit.

Somit ist die aus vier Schichten 101, 103, 105, 109 bestehende Fluidleitung 100 als eine kostengünstige Fluidleitung 100 ausgebildet, welche eine wirksame chemische und mechanische Beständigkeit gegenüber einem durch den Leitungsinnenraum 107 geleiteten Fluid und gegenüber äußeren Einflüssen aufweist. Eine aus vier Schichten 101, 103, 105, 109 bestehende Fluidleitung 100 stellt eine besonders wirksame Haftung zwischen der Sperrschicht 105 und dem Festigkeitsträger 103 innerhalb der Fluidleitung 100 sicher.

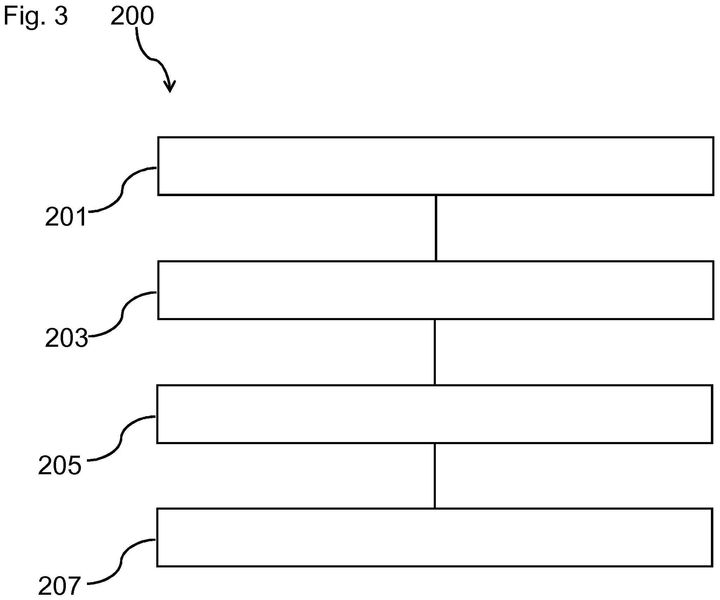

Fig. 3 zeigt eine schematische Darstellung eines Verfahrens zum Herstellen einer Fluidleitung.

Bei einer drei-Schicht Fluidleitung 100 umfasst das Verfahren 200 als ersten Schritt das Extrudieren 201 einer Sperrschicht 105, welche einen Leitungsinnenraum 107 der Fluidleitung 100 zum Leiten des Fluids begrenzt, wobei die Sperrschicht 105 ausgebildet ist, eine Diffusion des Fluids durch die Sperrschicht 105 zu reduzieren, umfasst das Verfahren 200 als weiteren Schritt das Anordnen 205 eines Festigkeitsträgers 103 auf der Sperrschicht 105, und umfasst das Verfahren als weiteren Schritt das Extrudieren 207 einer Außenschicht 101 auf dem Festigkeitsträger 103, wobei die Außenschicht 101 ein vernetztes chloriertes Polyethylen (CPE) umfasst.

Bei einer vier-Schicht Fluidleitung 100 umfasst das Verfahren 200 als ersten Schritt das Extrudieren 201 einer Sperrschicht 105, welche einen Leitungsinnenraum 107 der Fluidleitung 100 zum Leiten des Fluids begrenzt, wobei die Sperrschicht 105 ausgebildet ist, eine Diffusion des Fluids durch die Sperrschicht 105 zu reduzieren, umfasst das Verfahren 200 als weiteren Schritt das Extrudieren 203 einer Zwischenschicht 109 auf der Sperrschicht 105, umfasst das Verfahren 200 als weiteren Schritt das Anordnen 205 eines Festigkeitsträgers 103 auf der Zwischenschicht 109, und umfasst das Verfahren 200 als weiteren Schritt das Extrudieren 207 einer Außenschicht 101 auf dem Festigkeitsträger 103, wobei die Außenschicht 101 ein vernetztes chloriertes Polyethylen (CPE) umfasst.

Somit unterscheiden sich das Verfahren 200 zum Herstellen einer vier-Schicht Fluidleitung 100 gegenüber dem Verfahren 200 zum Herstellen einer drei-Schicht Fluidleitung 100 nur dadurch, dass beim Verfahren 200 zum Herstellen einer vier-Schicht Fluidleitung 100 nach dem Extrudieren 201 der Sperrschicht 105 das Extrudieren 203 der Zwischenschicht 109 auf der Sperrschicht 105 durchgeführt wird, bevor in einem weiteren Verfahrensschritt der Festigkeitsträger 103 angeordnet wird.

Hier kann insbesondere das Extrudieren 201 der Sperrschicht 105 und das Extrudieren 203 der Zwischenschicht 109 als separate Extrusionsschritte 201, 203 oder als ein gemeinsamer Co-Extrusionsschritt 201, 203 durchgeführt werden.

### BEZUGSZEICHENLISTE

- 100: Fluidleitung
- 101: Außenschicht
- 103: Festigkeitsträger
- 105: Sperrschicht
- 107: Leitungsinnenraum
- 109: Zwischenschicht
- 200: Verfahren zum Herstellen einer Fluidleitung
- 201: Erster Verfahrensschritt: Extrudieren einer Sperrschicht
- 203: Zweiter Verfahrensschritt: Extrudieren einer Zwischenschicht
- 205: Dritter Verfahrensschritt: Aufbringen eines Festigkeitsträgers
- 207: Vierter Verfahrensschritt: Extrudieren einer Außenschicht

## Patentansprüche

1. Fluidleitung (100) zum Leiten eines Fluids, mit:
einer Außenschicht (101), welche ein vernetztes chloriertes Polyethylen (CPE) umfasst;
einem Festigkeitsträger (103), welche innerhalb der Außenschicht (101) angeordnet ist, und
einer Sperrschicht (105), welche innerhalb des Festigkeitsträgers (103) angeordnet ist und welche einen Leitungsinnenraum (107) der Fluidleitung (100) zum Leiten des Fluids begrenzt, wobei die Sperrschicht (105) ausgebildet ist, eine Diffusion des Fluids durch die Sperrschicht (105) zu reduzieren,
wobei die Sperrschicht (105) einen aminisch vernetzten Ethylen-Acrylat Kautschuk (AEM) und/oder einen aminisch vernetzten Polyacrylat-Kautschuk (ACM) umfasst oder alternativ einen peroxidisch vernetzten Ethylen-Acrylat Kautschuk (AEM) und/oder einen peroxidisch vernetzten Polyacrylat-Kautschuk (ACM) umfasst,
wobei der aminisch vernetzte Ethylen-Acrylat Kautschuk (AEM) und/oder der aminisch vernetzte Polyacrylat-Kautschuk (ACM) ein Diamin und einen basischen Aktivator umfasst, und
wobei der peroxidisch vernetzte Ethylen-Acrylat Kautschuk (AEM) und/oder der peroxidisch vernetzte Polyacrylat-Kautschuk (ACM) ein Peroxid-Derivat, einen Co-Aktivator, und/oder einen Säureakzeptor umfasst.

2. Fluidleitung (100) nach Anspruch 1, wobei die Fluidleitung (100) eine Zwischenschicht (109) umfasst, welche zwischen der Sperrschicht (105) und dem Festigkeitsträger (103) angeordnet ist.

3. Fluidleitung (100) nach Anspruch 2, wobei die Zwischenschicht (109) ein vernetztes chloriertes Polyethylen (CPE) umfasst.

4. Fluidleitung (100) nach einem der vorangehenden Ansprüche, wobei das Diamin Hexamethylendiamin (HMD), Hexamethylendiamin-Carbamat (HMDC) und/oder 2,2-Bis[4-(4-aminophenoxy)phenyl]propen umfasst, und/oder wobei der basische Aktivator Diphenylguanidin (DPG) und/oder Diazabicycloundecen (DBU) umfasst.

5. Fluidleitung (100) nach einem der vorangehenden Ansprüche 1 bis 3, wobei das Peroxid-Derivat ein Alkyl-Aralkyl-Peroxid-Derivat, ein Diaralkyl-Peroxid-Derivat, ein Peroxyketal-Derivat und/oder ein Peroxyester-Derivat umfasst, wobei der Aktivator Triallylcyanurat (TAC), Triallylisocyanurat (TAIC), Trimethylolpropan-trimethacrylat (TRIM), Dimethylacrylat, Trimethylacrylat, Triazin, und/oder Bismaleinimid umfasst, und/oder wobei der Säureakzeptor Epoxidharze, epoxidierte Öle, Magnesiumoxid und/oder Hydrotalcit umfasst.

6. Fluidleitung (100) nach einem der vorangehenden Ansprüche, wobei die Außenschicht (101) und/oder die Zwischenschicht (109) aus vernetztem chloriertem Polyethylen (CPE) ein Thiazol-Derivat, ein Fettsäureamid-Derivat und/oder einen Säureakzeptor umfasst, und wobei der Säureakzeptor insbesondere Epoxidharze, epoxidierte Öle, Magnesiumoxid und/oder Hydrotalcit umfasst.

7. Fluidleitung (100) nach einem der vorangehenden Ansprüche, wobei die Außenschicht (101) und/oder die Zwischenschicht (109) ein peroxidisch vernetztes chloriertes Polyethylen (CPE) umfasst, wobei das peroxidisch vernetzte chlorierte Polyethylen (CPE) ein Peroxid-Derivat, einen Co-Aktivator, und/oder einen Säureakzeptor umfasst, wobei das Peroxid-Derivat insbesondere ein Alkyl-Aralkyl-Peroxid-Derivat, ein Diaralkyl-Peroxid-Derivat, ein Peroxyketal-Derivat und/oder ein Peroxyester-Derivat umfasst, wobei der Aktivator insbesondere Triallylcyanurat (TAC), Triallylisocyanurat *(*TAIC*)*, Trimethylolpropan-trimethacrylat (TRIM), Dimethylacrylat, Trimethylacrylat, Triazin, und/oder Bismaleinimid umfasst, und/oder wobei der Säureakzeptor insbesondere Epoxidharze, epoxidierte Öle, Magnesiumoxid und/oder Hydrotalcit umfasst.

8. Fluidleitung (100) nach einem der vorangehenden Ansprüche, wobei der Festigkeitsträger (103) aromatische oder aliphatische Polyamid-Fasern, Polyoxadiazol-Fasern, Polyester-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon umfasst.

9. Fluidleitung (100) nach Anspruch 8, wobei der Festigkeitsträger (103) als ein einlagiger oder mehrlagiger Festigkeitsträger (103) ausgebildet ist, und wobei der Festigkeitsträger (103) insbesondere ein Gewebe, Gewirk und/oder Gestrick umfasst.

10. Fluidleitung (100) nach einem der vorangehenden Ansprüche, wobei die Fluidleitung (100) als ein formstabiler Formschlauch ausgebildet ist, wobei der Formschlauch insbesondere einen zweidimensional oder dreidimensional gekrümmten Verlauf aufweist.

11. Fluidleitung (100) nach Anspruch 10, wobei der formstabile Formschlauch an einer dem Leitungsinnenraum (107) der Fluidleitung (100) zugewandten Innenseite der Sperrschicht (105) einen die Innenseite der Sperrschicht (105) umlaufenden Verdickungswulst aufweist.

12. Fluidleitung (100) nach einem der vorangehenden Ansprüche, wobei die Fluidleitung (100) insbesondere als ein Spritzgussformteil oder ein Extrusionsformteil geformt ist.

13. Verfahren (200) zum Herstellen einer Fluidleitung (100) zum Leiten eines Fluids, umfassend die folgenden Schritte:
Extrudieren (201) einer Sperrschicht (105), welche einen Leitungsinnenraum (107) der Fluidleitung (100) zum Leiten des Fluids begrenzt, wobei die Sperrschicht (105) ausgebildet ist, eine Diffusion des Fluids durch die Sperrschicht (105) zu reduzieren;
Anordnen (205) eines Festigkeitsträgers (103) auf der Sperrschicht (105); und
Extrudieren (207) einer Außenschicht (101) auf dem Festigkeitsträger (103), wobei die Außenschicht (101) ein vernetztes chloriertes Polyethylen (CPE) umfasst,
wobei die Sperrschicht (105) einen aminisch vernetzten Ethylen-Acrylat Kautschuk (AEM) und/oder einen aminisch vernetzten Polyacrylat-Kautschuk (ACM) umfasst, oder alternativ einen peroxidisch vernetzten Ethylen-Acrylat Kautschuk (AEM) und/oder einen peroxidisch vernetzten Polyacrylat-Kautschuk (ACM) umfasst,
wobei der aminisch vernetzte Ethylen-Acrylat Kautschuk (AEM) und/oder der aminisch vernetzte Polyacrylat-Kautschuk (ACM) ein Diamin und einen basischen Aktivator umfasst, und
wobei der peroxidisch vernetzte Ethylen-Acrylat Kautschuk (AEM) und/oder der peroxidisch vernetzte Polyacrylat-Kautschuk (ACM) ein Peroxid-Derivat, einen Co-Aktivator, und/oder einen Säureakzeptor umfasst.

14. Verfahren (200) nach Anspruch 13, umfassend die folgenden Schritte:
Extrudieren (201) einer Sperrschicht (105), welche einen Leitungsinnenraum (107) der Fluidleitung (100) zum Leiten des Fluids begrenzt, wobei die Sperrschicht (105) ausgebildet ist, eine Diffusion des Fluids durch die Sperrschicht (105) zu reduzieren;
Extrudieren (203) einer Zwischenschicht (109) auf der Sperrschicht (105);
Anordnen (205) eines Festigkeitsträgers (103) auf der Zwischenschicht (109); und
Extrudieren (207) einer Außenschicht (101) auf dem Festigkeitsträger (103), wobei die Außenschicht (101) ein vernetztes chloriertes Polyethylen (CPE) umfasst, und
wobei insbesondere das Extrudieren (201) der Sperrschicht (105) und das Extrudieren (203) der Zwischenschicht (109) als separate Extrusionsschritte (201, 203) oder als ein gemeinsamer Co-Extrusionsschritt (201, 203) durchgeführt werden.

## Claims

1. Fluid line (100) for conducting a fluid, comprising:
an external layer (101), which comprises a crosslinked chlorinated polyethylene (CPE);
a reinforcement support (103), which is arranged within the external layer (101), and
a barrier layer (105), which is arranged within the reinforcement support (103) and delimits a line interior (107) of the fluid line (100) for conducting the fluid, wherein the barrier layer (105) is configured to reduce a diffusion of the fluid through the barrier layer (105),
wherein the barrier layer (105) comprises an aminically crosslinked ethylene-acrylate rubber (AEM) and/or an aminically crosslinked polyacrylate rubber (ACM), or alternatively comprises a peroxidically crosslinked ethylene-acrylate rubber (AEM) and/or a peroxidically crosslinked polyacrylate rubber (ACM),
wherein the aminically crosslinked ethylene-acrylate rubber (AEM) and/or the aminically crosslinked polyacrylate rubber (ACM) comprises a diamine and a basic activator, and
wherein the peroxidically crosslinked ethylene-acrylate rubber (AEM) and/or the peroxidically crosslinked polyacrylate rubber (ACM) comprises a peroxide derivative, a co-activator, and/or an acid acceptor.

2. Fluid line (100) according to claim 1, wherein the fluid line (100) comprises an intermediate layer (109), which is arranged between the barrier layer (105) and the reinforcement support (103).

3. Fluid line (100) according to claim 2, wherein the intermediate layer (109) comprises a crosslinked chlorinated polyethylene (CPE).

4. Fluid line (100) according to any one of the preceding claims, wherein the diamine comprises hexamethylenediamine (HMD), hexamethylenediamine carbamate (HMDC) and/or 2,2-Bis[4-(4-aminophenoxy)phenyl]propene, and/or wherein the basic activator comprises diphenylguanidine (DPG) and/or diazabicycloundecene (DBU).

5. Fluid line (100) according to any of the preceding claims 1 to 3, wherein the peroxide derivative comprises an alkyl-aralkyl peroxide derivative, a diaralkyl peroxide derivative, a peroxyketal derivative and/or a peroxyester derivative, wherein the activator comprises triallyl cyanurate (TAC), triallyl isocyanurate (TAlC), trimethylolpropane trimethacrylate (TRIM), dimethyl acrylate, trimethyl acrylate, triazine, and/or bismaleimide, and/or wherein the acid acceptor comprises epoxy resins, epoxidized oils, magnesium oxide and/or hydrotalcite.

6. Fluid line (100) according to any of the preceding claims, wherein the external layer (101) and/or the intermediate layer (109) made of crosslinked chlorinated polyethylene (CPE) comprises a thiazole derivative, a fatty acid amide derivative and/or an acid acceptor, and wherein the acid acceptor in particular comprises epoxy resins, epoxidized oils, magnesium oxide and/or hydrotalcite.

7. Fluid line (100) according to any of the preceding claims, wherein the external layer (101) and/or the intermediate layer (109) comprises a peroxidically crosslinked chlorinated polyethylene (CPE), wherein the peroxidically crosslinked chlorinated polyethylene (CPE) comprises a peroxide derivative, a co-activator, and/or an acid acceptor, wherein the peroxide derivative in particular comprises an alkyl-aralkyl peroxide derivative, a diaralkyl peroxide derivative, a peroxyketal derivative and/or a peroxyester derivative, wherein the activator in particular comprises triallyl cyanurate (TAC), triallyl isocyanurate (TAlC), trimethylolpropane trimethacrylate (TRIM), dimethyl acrylate, trimethyl acrylate, triazine, and/or bismaleimide, and/or wherein the acid acceptor in particular comprises epoxy resins, epoxidized oils, magnesium oxide and/or hydrotalcite.

8. Fluid line (100) according to any of the preceding claims, wherein the reinforcement support (103) comprises aromatic or aliphatic polyamide fibres, polyoxadiazole fibres, polyester fibres, aramid fibres, in particular meta-aramid fibres and/or para-aramid fibres, polyimide fibres, polyvinyl acetal fibres, polyetheretherketone fibres, or a mixture thereof.

9. Fluid line (100) according to claim 8, wherein the reinforcement support (103) is configured as a single-layered or multiple-layered reinforcement support (103), and wherein the reinforcement support (103) in particular comprises a woven fabric, a warp-knitted fabric and/or a knitted fabric.

10. Fluid line (100) according to any of the preceding claims, wherein the fluid line (100) is configured as a dimensionally stable moulded hose, wherein the moulded hose in particular has a two-dimensionally or three-dimensionally curved shape.

11. Fluid line (100) according to claim 10, wherein the dimensionally stable moulded hose comprises a thickening bead circulating the inner side of the barrier layer (105) at an inner side of the barrier layer (105), said inner side facing the line interior (107) of the fluid line (100).

12. Fluid line (100) according to any of the preceding claims, wherein the fluid line (100) in particular is formed as an injection moulded part or as an extruded moulded part.

13. Method (200) for producing a fluid line (100) for conducting a fluid, comprising the following steps:
extruding (201) a barrier layer (105), which delimits a line interior (107) of the fluid line (100) for conducting the fluid, wherein the barrier layer (105) is configured to reduce a diffusion of the fluid through the barrier layer (105);
arranging (205) a reinforcement support (103) on the barrier layer (105); and
extruding (207) an external layer (101) on the reinforcement support (103), wherein the external layer (101) comprises a crosslinked chlorinated polyethylene (CPE),
wherein the barrier layer (105) comprises an aminically crosslinked ethylene-acrylate rubber (AEM) and/or an aminically crosslinked polyacrylate rubber (ACM), or alternatively comprises a peroxidically crosslinked ethylene-acrylate rubber (AEM) and/or a peroxidically crosslinked polyacrylate rubber (ACM),
wherein the aminically crosslinked ethylene-acrylate rubber (AEM) and/or the aminically crosslinked polyacrylate rubber (ACM) comprises a diamine and a basic activator, and
wherein the peroxidically crosslinked ethylene-acrylate rubber (AEM) and/or the peroxidically crosslinked polyacrylate rubber (ACM) comprises a peroxide derivative, a co-activator, and/or an acid acceptor.

14. Method (200) according to claim 13, comprising the following steps:
extruding (201) a barrier layer (105), which delimits a line interior (107) of the fluid line (100) for conducting the fluid, wherein the barrier layer (105) is configured to reduce a diffusion of the fluid through the barrier layer (105);
extruding (203) an intermediate layer (109) on the barrier layer (105);
arranging (205) a reinforcement support (103) on the intermediate layer (109); and
extruding (207) an external layer (101) on the reinforcement support (103), wherein the external layer (101) comprises a crosslinked chlorinated polyethylene (CPE), and
wherein in particular the extrusion (201) of the barrier layer (105) and the extrusion (203) of the intermediate layer (109) are carried out as separate extrusion steps (201, 203) or together as a single co-extrusion step (201, 203).

## Revendications

1. Conduite de fluide (100) pour la conduite d'un fluide, comportant :
une couche externe (101), qui comprend un polyéthylène chloré réticulé (CPE) ;
un support de renfort (103), qui est agencé à l'intérieur de la couche externe (101), et
une couche barrière (105), qui est disposée à l'intérieur du support de renfort (103) et qui délimite un espace interne de conduite (107) de la conduite de fluide (100) pour la conduite du fluide, la couche barrière (105) étant conçue pour réduire une diffusion du fluide à travers la couche barrière (105),
la couche barrière (105) comprenant un caoutchouc d'éthylène-acrylate réticulé (AEM) aminique et/ou un caoutchouc de polyacrylate réticulé (ACM) aminique ou en variante un caoutchouc d'éthylène-acrylate réticulé (AEM) peroxydique et/ou un caoutchouc de polyacrylate réticulé (ACM) peroxydique,
le caoutchouc d'éthylène-acrylate réticulé (AEM) aminique et/ou le caoutchouc de polyacrylate réticulé (ACM) aminique comprenant une diamine et un activateur basique, et
le caoutchouc d'éthylène-acrylate réticulé (AEM) peroxydique et/ou le caoutchouc de polyacrylate réticulé (ACM) peroxydique comprenant un dérivé de peroxyde, un co-activateur et/ou un accepteur d'acide.

2. Conduite de fluide (100) selon la revendication 1, la conduite de fluide (100) comprenant une couche intermédiaire (109), qui est disposée entre la couche barrière (105) et le support de renfort (103) .

3. Conduite de fluide (100) selon la revendication 2, la couche intermédiaire (109) comprenant un polyéthylène chloré réticulé (CPE).

4. Conduite de fluide (100) selon l'une quelconque des revendications précédentes, la diamine comprenant l'hexaméthylènediamine (HMD), le carbonate d'hexaméthylènediamine (HMDC) et/ou le 2,2-bis[4-(4-aminophénoxy)phényl]propène, et/ou l'activateur basique comprenant la diphénylguanidine (DPG) et/ou le diazabicycloundécène (DBU).

5. Conduite de fluide (100) selon l'une quelconque des revendications précédentes 1 à 3, le dérivé de peroxyde étant un dérivé d'alkyl-aralkyl-peroxyde, un dérivé de diaralkyl-peroxyde, un dérivé de peroxycétal et/ou un dérivé de peroxyester, l'activateur comprenant le cyanurate de triallyle (TAC), l'isocyanurate de triallyle (TAIC), le triméthacrylate de triméthylolpropane (TRIM), un diméthyacrylate, un triméthylacrylate, une triazine et/ou un bismaléimide, et/ou l'accepteur d'acide comprenant des résines époxy, des huiles époxydées, de l'oxyde de magnésium et/ou une hydrotalcite.

6. Conduite de fluide (100) selon l'une quelconque des revendications précédentes, la couche externe (101) et/ou la couche intermédiaire (109) de polyéthylène chloré réticulé (CPE) comprenant un dérivé de thiazole, un dérivé d'amide d'acide gras et/ou un accepteur d'acide, et l'accepteur d'acide comprenant en particulier des résines époxy, des huiles époxydées, de l'oxyde de magnésium et/ou une hydrotalcite.

7. Conduite de fluide (100) selon l'une quelconque des revendications précédentes, la couche externe (101) et/ou la couche intermédiaire (109) comprenant un polyéthylène chloré réticulé (CPE) peroxydique, le polyéthylène chloré réticulé (CPE) peroxydique comprenant un dérivé de peroxyde, un co-activateur et/ou un accepteur d'acide, le dérivé de peroxyde comprenant en particulier un dérivé d'alkyl-aralkyl-peroxyde, un dérivé de diaralkyl-peroxyde, un dérivé de peroxycétal et/ou un dérivé de peroxyester, l'activateur comprenant en particulier le cyanurate de triallyle (TAC), l'isocyanurate de triallyle (TAIC), le triméthacrylate de triméthylolpropane (TRIM), un diméthyacrylate, un triméthylacrylate, une triazine et/ou un bismaléimide, et/ou l'accepteur d'acide comprenant en particulier des résines époxy, des huiles époxydées, de l'oxyde de magnésium et/ou une hydrotalcite.

8. Conduite de fluide (100) selon l'une quelconque des revendications précédentes, le support de renfort (103) comprenant des fibres de polyamide aromatique ou aliphatique, des fibres de polyoxadiazole, des fibres de polyester, des fibres d'aramide, en particulier des fibres de méta-aramide et/ou des fibres de para-aramide, des fibres de polyimide, des fibres de polyvinylacétal, des fibres de polyétheréthercétone ou des mélanges correspondants.

9. Conduite de fluide (100) selon la revendication 8, le support de renfort (103) étant formé en tant que support de renfort (103) monocouche ou multicouche, et le support de renfort (103) comprenant en particulier un tissu, une étoffe et/ou un tricot.

10. Conduite de fluide (100) selon l'une quelconque des revendications précédentes, la conduite de fluide (100) étant formée en tant que tuyau moulé dimensionnellement stable, le tuyau moulé présentant en particulier un tracé courbe bidimensionnel ou tridimensionnel.

11. Conduite de fluide (100) selon la revendication 10, le tuyau moulé dimensionnellement stable présentant, au niveau d'un côté interne de la couche barrière (105) tourné vers l'espace interne de conduite (107) de la conduite de fluide (100), un bourrelet épaississant entourant le côté interne de la couche barrière (105).

12. Conduite de fluide (100) selon l'une quelconque des revendications précédentes, la conduite de fluide (100) étant en particulier formée en tant que pièce moulée par injection ou pièce moulée par extrusion.

13. Procédé (200) pour la fabrication d'une conduite de fluide (100) pour la conduite d'un fluide, comprenant les étapes suivantes :
extrusion (201) d'une couche barrière (105), qui délimite un espace interne de conduite (107) de la conduite de fluide (100) pour la conduite du fluide, la couche barrière (105) étant conçue pour réduire une diffusion du fluide à travers la couche barrière (105) ;
disposition (205) d'un support de renfort (103) sur la couche barrière (105) ; et
extrusion (207) d'une couche externe (101) sur le support de renfort (103), la couche externe (101) comprenant un polyéthylène chloré réticulé (CPE),
la couche barrière (105) comprenant un caoutchouc d'éthylène-acrylate réticulé (AEM) aminique et/ou un caoutchouc de polyacrylate réticulé (ACM) aminique ou en variante un caoutchouc d'éthylène-acrylate réticulé (AEM) peroxydique et/ou un caoutchouc de polyacrylate réticulé (ACM) peroxydique,
le caoutchouc d'éthylène-acrylate réticulé (AEM) aminique et/ou le caoutchouc de polyacrylate réticulé (ACM) aminique comprenant une diamine et un activateur basique, et
le caoutchouc d'éthylène-acrylate réticulé (AEM) peroxydique et/ou le caoutchouc de polyacrylate réticulé (ACM) peroxydique comprenant un dérivé de peroxyde, un co-activateur et/ou un accepteur d'acide.

14. Procédé (200) selon la revendication 13, comprenant les étapes suivantes :
extrusion (201) d'une couche barrière (105), qui délimite un espace interne de conduite (107) de la conduite de fluide (100) pour la conduite du fluide, la couche barrière (105) étant conçue pour réduire une diffusion du fluide à travers la couche barrière (105) ;
extrusion (203) d'une couche intermédiaire (109) sur la couche barrière (105) ;
disposition (205) d'un support de renfort (103) sur la couche intermédiaire (109) ; et
extrusion (207) d'une couche externe (101) sur le support de renfort (103), la couche externe (101) comprenant un polyéthylène chloré réticulé (CPE), et
en particulier l'extrusion (201) de la couche barrière (105) et l'extrusion (203) de la couche intermédiaire (109) étant réalisées en tant qu'étapes extrusion (201, 203) séparées ou en tant qu'étape de coextrusion commune (201, 203).
